# EUROPEAN PATENT APPLICATION

(11) **EP 4 780 061 A1**
(43) Date of publication of application: **22.07.2026**
(21) Application number: 24872621.8
(22) Date of filing: 08.03.2024
(51) Int. Cl.: H04W 24/10, H04W 24/08, H04W 4/90, G06N 20/00

(54) **ELECTRONIC DEVICE AND METHOD FOR PERFORMING MEASUREMENT REPORTING IN WIRELESS COMMUNICATION SYSTEM**

(30) Priority: 27.09.2023 KR 20230131120
(71) Applicant: Samsung Electronics Co., Ltd., Suwon-si, Gyeonggi-do 16677 (KR)
(72) Inventor: YOON, Seungil, Suwon-si Gyeonggi-do 16677 (KR); VANKAYALA, Satya Kumar, Bangalore Karnataka 560037 (IN)
(74) Representative: Gulde & Partner
(86) International application number: PCT/KR2024/003031
(87) International publication number: WO 2025/070906

(57) **Abstract**

A method performed by a user equipment in a wireless communication system according to an embodiment of the disclosure, may include receiving from a base station, configuration information related to survivor reporting in an emergency situation, the configuration information including at least one of location measurement method information of the user equipment or information of a survivor identification method used for survivor identification to determine that a user of the user equipment is in the emergency situation; determining the survivor identification method used for the survivor identification, based on the survivor identification method information; performing the survivor identification based on the determined survivor identification method; and transmitting to the base station, a measurement report including the survivor report, based on the survivor identification, the survivor report including at least one of the survivor identification method information used by the user equipment or location information of the user equipment measured based on a location measurement method determined based on location measurement method information of the user equipment.

## Description

### [Technical Field]

The disclosure relates to an electronic device and a method for performing measurement reporting in a wireless communication network, and more particularly, to the electronic device and the method for measurement reporting related to survivor rescue in an emergency disaster situation.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

According to an embodiment of the disclosure, a user equipment may perform survivor reporting in an emergency disaster situation.

According to an embodiment of the disclosure, a user equipment may report its location in an emergency disaster situation.

According to an embodiment of the disclosure, even if a user equipment is not able to perform survivor reporting in an emergency disaster situation, a base station may obtain and transmit an approximate location of the user equipment to a disaster management server.

Technical problems to be achieved in the disclosure are not limited to the technical problems mentioned above, and other technical problems not mentioned will be clearly understood by a person having ordinary skill in the technical field to which the disclosure belongs from the description below.

### [Solution to Problem]

A method performed by a user equipment in a wireless communication system according to an embodiment of the disclosure, may include receiving from a base station, configuration information related to survivor reporting in an emergency situation, the configuration information including at least one of location measurement method information of the user equipment or information of a survivor identification method used for survivor identification to determine that a user of the user equipment is in the emergency situation; determining the survivor identification method used for the survivor identification, based on the survivor identification method information; performing the survivor identification based on the determined survivor identification method; and transmitting to the base station, a measurement report including the survivor report, based on the survivor identification, the survivor report including at least one of the survivor identification method information used by the user equipment or location information of the user equipment measured based on a location measurement method determined based on location measurement method information of the user equipment.

A method performed by a base station in a wireless communication system according to an embodiment of the disclosure, may include transmitting to a user equipment, configuration information related to survivor reporting in an emergency situation, the configuration information including at least one of location measurement method information of the user equipment or information of a survivor identification method used for survivor identification to determine that a user of the user equipment is in the emergency situation; and receiving from the user equipment, a measurement report including the survivor report based on the survivor identification, the survivor report including at least one of the survivor identification method information used by the user equipment based on the survivor identification method information or location information of the user equipment measured based on a location measurement method determined based on location measurement method information of the user equipment.

A method performed by a server in a wireless communication system according to an embodiment of the disclosure, may include, based on machine learning-based training, determining at least one of a reporting period of survivor reporting performed by at least one user equipment in an emergency situation or a survivor identification method to be used for survivor identification which determines that a user of the at least one user equipment is in the emergency situation; transmitting to a mobility management entity (MME), a service registration message related to the survivor reporting of the at least one user equipment, the service registration message includes at least one of information of the reporting period, information of the survivor identification method, or location measurement method information of the at least one user equipment, determined based on the machine learning-based training; and receiving from the MME, a service report message including a survivor report of each of the at least one user equipment based on the service registration message, and the survivor report of each of the at least one equipment may include at least one of the reporting period information, information of the survivor identification method used by each of the at least one user equipment determined based on the survivor identification method information, or location information of each of the at least one user equipment measured based on a location measurement method determined based on the location measurement method information.

A method performed by an unmanned aerial vehicle (UAV) in a wireless communication system according to an embodiment of the disclosure, may include identifying whether a connection of a base station and a user equipment is released; establishing a connection with the user equipment, if identifying that the connection of the base station and the user equipment is released; transmitting to the user equipment, configuration information related to survivor reporting in an emergency situation, the configuration information including at least one of location measurement method information of the user equipment or survivor identification method information used for survivor identification to determine that a user of the user equipment is in the emergency situation; and receiving from the user equipment, a measurement report including the survivor report based on the survivor identification, and the survivor report may include at least one of information of the survivor identification method used by the user equipment determined based on the survivor identification method information or location information of the user equipment measured based on a location measurement method based on the location measurement method information of the user equipment.

A user equipment in a wireless communication system according to an embodiment of the disclosure, may include a transceiver configured to transmit and receive a signal; and at least one processor connected to the transceiver, the at least one processor may be configured to receive from a base station, configuration information related to survivor reporting in an emergency situation, the configuration information including at least one of location measurement method information of the user equipment or information of a survivor identification method used for survivor identification to determine that a user of the user equipment is in the emergency situation; determine the survivor identification method used for the survivor identification, based on the survivor identification method information; perform the survivor identification based on the determined survivor identification method; and transmit to the base station, a measurement report including the survivor report, based on the survivor identification, and the survivor report may include at least one of the survivor identification method information used by the user equipment or location information of the user equipment measured based on a location measurement method determined based on location measurement method information of the user equipment.

A base station in a wireless communication system according to an embodiment of the disclosure, may include a transceiver configured to transmit and receive a signal; and at least one processor connected to the transceiver, the at least one processor may be configured to transmit to a user equipment, configuration information related to survivor reporting in an emergency situation, the configuration information including at least one of location measurement method information of the user equipment or information of a survivor identification method used for survivor identification to determine that a user of the user equipment is in the emergency situation; and transmit from the user equipment, a measurement report including the survivor report based on the survivor identification, and the survivor report may include at least one of the survivor identification method information used by the user equipment based on the survivor identification method information or location information of the user equipment measured based on a location measurement method determined based on location measurement method information of the user equipment.

### [Advantageous Effects of Invention]

According to an embodiment, a rescuer may efficiently obtain locations of survivors based on survivor reports of user equipments in an emergency disaster situation.

According to an embodiment, a rescuer may rescue a survivor who is a user of a user equipment unable to transmit a survivor report to a base station in an emergency disaster situation.

Besides, various effects obtained directly or indirectly from this document may be provided.

### [Brief Description of Drawings]

FIG. 1 illustrates an example of a system configuration for a survivor rescue service in an emergency disaster situation according to an embodiment of the disclosure.
FIG. 2 is a flowchart illustrating an example of operations performed for a survivor rescue service in an emergency disaster situation according to an embodiment of the disclosure.
FIG. 3 is a flowchart illustrating another example of operations performed for a survivor rescue service in an emergency disaster situation according to an embodiment of the disclosure.
FIG. 4 is a diagram illustrating yet another example of performing a survivor reporting method according to an embodiment of the disclosure.
FIG. 5 is a diagram illustrating still another example of performing a survivor reporting method according to an embodiment of the disclosure.
FIG. 6 is a diagram illustrating an example of an artificial intelligence (AI) server configuration according to an embodiment of the disclosure.
FIG. 7 is a flowchart of a method for collecting selection algorithm inputs to determine a survivor identification method at an AI server according to an embodiment of the disclosure.
FIG. 8 is a diagram illustrating an example of a user equipment AI client configuration for performing survivor identification according to an embodiment of the disclosure.
FIG. 9 is a diagram for explaining a method for performing survivor reporting of a user equipment according to an embodiment of the disclosure.
FIG. 10 is a diagram for explaining a method for performing survivor reporting of a base station according to an embodiment of the disclosure.
FIG. 11 is a diagram for explaining a method for performing survivor reporting of an AI server according to an embodiment of the disclosure.
FIG. 12 is a diagram for explaining a method for performing survivor reporting of an unmanned aerial vehicle (UAV) according to an embodiment of the disclosure.
FIG. 13 is a diagram illustrating a structure of a base station according to an embodiment of the disclosure.
FIG. 14 is a diagram illustrating a structure of a user equipment according to an embodiment of the disclosure.

### [Mode for the Invention]

Hereinafter, various embodiments of the present invention are described with reference to the attached drawings. However, it is not intended to limit the present invention to specific embodiments, but should be understood to include various modifications, equivalents, and/or alternatives of the embodiments of the present invention.

Hereafter, embodiments of the disclosure are described in detail with reference to the accompanying drawings. In describing the embodiments, technical contents well known in the technical field to which the disclosure pertains and not directly related to the disclosure will be omitted in the specification. This is to more clearly provide the subject matter of the disclosure by omitting unnecessary descriptions without obscuring the subject matter of the disclosure.

For the same reason, some components in the accompanying drawings are exaggerated, omitted, or schematically illustrated. Also, a size of each component does not entirely reflect an actual size. The same reference numeral is given to the same or corresponding element in each drawing.

Advantages and features of the disclosure, and methods for achieving them will be clarified with reference to embodiments described below in detail together with the accompanying drawings. However, the disclosure is not limited to the embodiments disclosed below but may be implemented in various different forms, the embodiments are provided to only complete the scope of the disclosure and to allow those skilled in the art to which the disclosure pertains to fully understand a category of the disclosure, and the disclosure is solely defined within the scope of the claims. The same reference numeral refers to the same element throughout the specification.

At this time, it will be understood that each block of the process flowchart illustrations and combinations of the flowchart illustrations may be executed by computer program instructions. Since these computer program instructions may be mounted on a processor of a general purpose computer, a special purpose computer or other programmable data processing equipment, the instructions executed by the processor of the computer or other programmable data processing equipment may generate means for executing functions described in the flowchart block(s). Since these computer program instructions may also be stored in a computer-usable or computer-readable memory which may direct a computer or other programmable data processing equipment to function in a particular manner, the instructions stored in the computer-usable or computer-readable memory may produce a manufacture article including instruction means which implement the function described in the flowchart block(s). Since the computer program instructions may also be loaded on a computer or other programmable data processing equipment, a series of operational steps may be performed on the computer or other programmable data processing equipment to produce a computer-executed process, and thus the instructions performing the computer or other programmable data processing equipment may provide steps for executing the functions described in the flowchart block(s).

In addition, each block may represent a portion of a module, a segment or code which includes one or more executable instructions for implementing a specified logical function(s). Also, it should be noted that the functions mentioned in the blocks may occur out of order in some alternative implementations. For example, two blocks shown in succession may in fact be executed substantially concurrently or the blocks may sometimes be executed in the reverse order depending on corresponding functionality.

At this time, the term '~unit' as used in the disclosure indicates a software or a hardware component such as a field programmable gate array (FPGA) or an application specific integrated circuit (ASIC), and '~unit' performs specific roles. However, '~unit' is not limited to software or hardware. '~unit' may be configured to reside on an addressable storage medium and configured to reproduce on one or more processors. Accordingly, '~unit' may include, for example, components such as software components, object-oriented software components, class components and task components, processes, functions, attributes, procedures, sub-routines, segments of program code, drivers, firmware, microcode, circuitry, data, databases, data structures, tables, arrays, and variables. Functions provided in the components and '~unit' may be combined to fewer components and '~units' or may be further separated into additional components and '~units'. Further, the components and '~units' may be implemented to reproduce one or more central processing units (CPUs) within a device or a security multimedia card. Also, '~unit' may include one or more processors in the embodiment.

Hereafter, terms for identifying access nodes, terms indicating network entities, terms indicating messages, terms indicating interfaces between network entities, terms indicating various identification information, and the like are illustratively used in the description for the sake of convenience. Accordingly, the disclosure is not limited by the terms as used, and other terms indicating subjects having equivalent technical meanings may be used.

For convenience of explanation, the disclosure uses terms and names defined in the 3rd generation partnership project (3GPP) long term evolution (LTE) standard. However, the present invention is not limited by the terms and the names, and may be equally applied to systems conforming to other standards. In the disclosure, a base station may be used interchangeably with an eNB and a gNB for convenience of explanation. That is, the base station described as the eNB may represent a gNB. In the disclosure, the term of a user equipment may represent various wireless communication devices as well as mobile phones, narrowband (NB)-internet of things (IoT) devices, and sensors.

### <Contents related to the present invention>

### Definition of terms

The disclosure may use the following terms/abbreviations for convenience of explanation.
UE: User Equipment
RAN: Radio Access Network
AP: Access Point
CBE: cell broadcast entities
CBC: cell broadcast centre
CRBS: Citizens Broadband Radio Service
IE: Information element
MME: Mobility management entity
AI: Artificial intelligence
ML: Machine learning
UAV: Unmanned aerial vehicle
API: Application Programming Interface
NE: Network entity
SINR: Signal to Interference plus Noise Ratio

The disclosure relates to a signaling method for rescuing people in an emergency disaster situation or a critical situation due to a natural disaster. Generally, in an emergency disaster situation or a critical situation due to a natural disaster, a system such as a public warning system (PWS) and an earthquake and tsunami warning system (ETWS) used to warn of the emergency disaster situation or the critical situation may be configured in the form of a one-way warning (or broadcasting) service to notify the public of occurrence of the emergency disaster situation or the critical situation and to enable them to find a safe place or shelter. In particular, the system such as PWS and ETWS supports only a function assuming one-way communication to transmit warning messages to UEs of people in the emergency disaster situation or the emergency situation, and accordingly does not support a function, assuming two-way communication, for directly assisting in searching for the people in the emergency disaster situation or the emergency situation. Hence, to more effectively identify and rescue the people in the emergency disaster situation or the emergency situation due to a natural disaster, what is needed is a method for supporting a function assuming one-way communication to transmit warning messages to UEs of the people in the emergency disaster situation or the emergency situation, such that the people in the emergency disaster situation or the emergency situation may evacuate to a safe place. In addition, what is needed is a method in which a UE directly supports a function to allow the people in the emergency disaster situation or the emergency situation to directly request rescue from a rescuer (or, to allow the UEs used by the people in the emergency disaster situation or the emergency situations to directly request rescue from a rescue system). Hereinafter, for the convenience of explanation, the people in the emergency disaster situation or the critical situation (or the UEs used by the people in the emergency disaster situation or the critical situation) may be referred to as survivors, and may be named as various modified forms within a substantially identical range or within a range allowing similar interpretation.

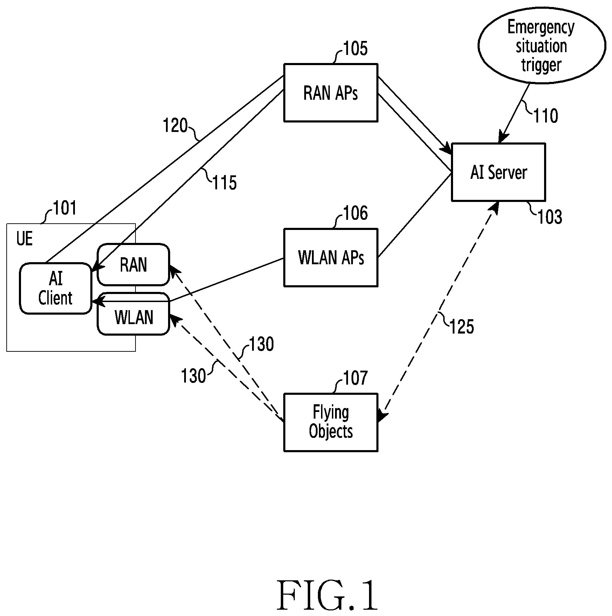

First, an example of an overall system configuration for a survivor rescue service in an emergency disaster situation according to an embodiment of the disclosure is described with reference to FIG. 1.

FIG. 1 illustrates an example of a system configuration for a survivor rescue service in an emergency disaster situation according to an embodiment of the disclosure.

Referring to FIG. 1, the system for the survivor rescue service in the emergency disaster situation may include a UE 101 of a survivor, an AI server 103 for holistically managing the survivor rescue service and storing/managing information received from the survivor UE 101, APs 105 and 106 for communicating with the UE 101, and a flying object 107 for replacing the role of the APs 105 and 106 if the APs 105 and 106 are unable to communicate with the UE 101. At this time, the UE 101 may include an AI client for performing necessary operations to conduct a survivor report, and the flying object 107 may use any flying device in the form of an UAV to replace the role of the APs 105 and 106, and an example of the UAV may include a drone and so on.

In FIG. 1, if an emergency disaster situation is triggered, the AI server 103 may detect occurrence of the emergency disaster situation in operation 110, and instruct all target UEs located in an area where the emergency disaster situation is determined to occur to perform a survivor report through a specific form of paging or broadcasting in operation 115. In so doing, the paging or the broadcasting performed by the AI server 103 may be transmitted to the UE 101 via the APs 105 and 106. Herein, the paging or the broadcasting may include information related to settings required for the UE 101 to perform the survivor report, and the survivor report may be a report including information required to rescue the survivor who is the user of the UE 101. The configuration information required for the UE 101 to perform the survivor report and the information included in the survivor report shall be described in more detail.

Next, the UE 101 receiving the paging or the broadcasting from the AP 105 or 106 may perform an operation of detecting movement of the survivor who is the user of the UE 101, and report a survivor report including location information of the UE 101 together with the result of the movement detection to the AP 105 or 106, and the AP 105 or 106 receiving the survivor report from the UE 101 may forward it to the AI server 103 in operation 120. The AI server 103 may manage the survivor report received from the AP 105 or 106, and utilize it for the survivor rescue in the emergency disaster situation.

In addition, if the UE 101 is unable to communicate with the AP 105 or 106, the flying object 107 may perform operations 115 and 120 described above, in place of the AP 105 or 106, and operations 115 and 120 of FIG. 1 may be replaced by the flying object 107 in operations 125 and 130 of FIG. 1. In particular, in operation 125, the flying object 107 may move to an area managed by the AP 105 or 106, request the AI server 103 to register itself as a subject of the survivor rescue service, and receive permission from the AI server 103 to communicate with UEs located in the area managed by the AP 105 or 106.

FIG. 1 has described, for convenience of explanation, the operations performed by one UE 101 with the APs 105 and 106, the flying object 107 and the AI server 103, but it is noted that the operations described in FIG. 1 may be performed by UEs of one or more survivors in an emergency disaster situation.

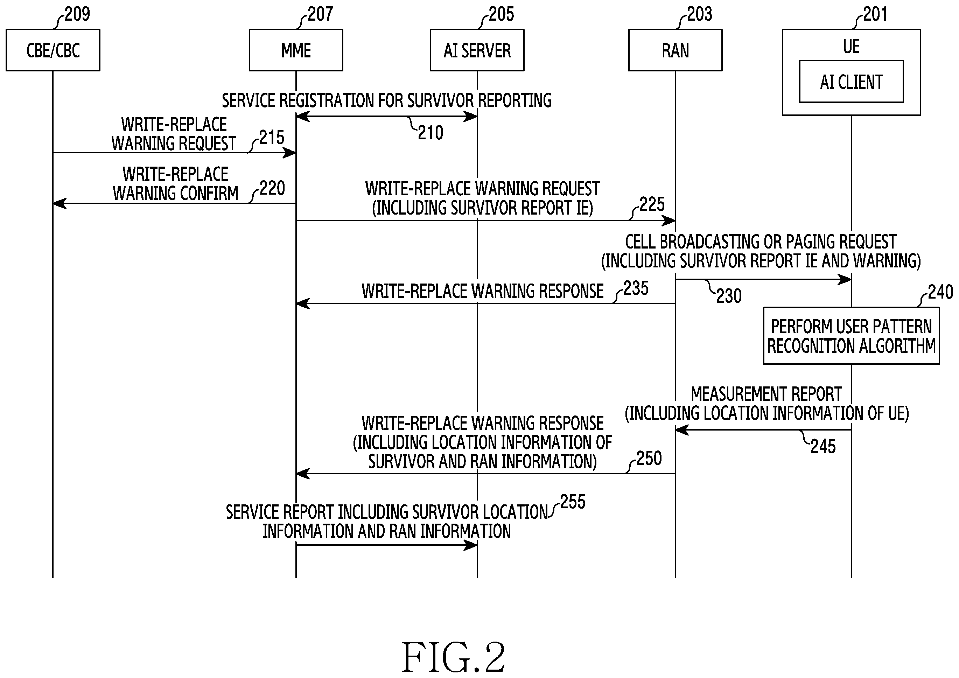

Hereinafter, an example of an overall signal flow for performing a survivor rescue service in an emergency disaster situation according to an embodiment of the disclosure is described with reference to FIG. 2.

FIG. 2 is a flowchart illustrating an example of operations performed for a survivor rescue service in an emergency disaster situation according to an embodiment of the disclosure.

Referring to FIG. 2, in the PWS or ETWS described above, the CBE/CBC may generally trigger a one-way warning transmission to a UE 201 of a survivor in an emergency disaster situation, but the CBE/CBC may does not consider what action the UE 201 receiving the warning conducts after receiving the warning. In particular, the PWS or the ETWS does not consider what action the UE 201 receiving the warning will perform after receiving the warning, and assumes that a survivor who is a user of the UE 201, receiving the warning will find a safe place to escape from the emergency disaster situation. Unlike in the PWS or the ETWS, according to the method of the disclosure described in FIG. 2, it is possible to rescue the survivor not only in a case where there is no way for the survivor to escape from the emergency disaster situation, but also in a case where the survivor may not obtain his/her current location, or in a case where the survivor is conscious but is not able to attempt to make a call for rescue. In particular, according to the method of the disclosure described in FIG. 2, the UE 201 of the survivor in the emergency disaster situation may systematically report its location by utilizing an interface of the PWS or the ETWS. Hence, the location of the survivor in the emergency disaster situation may be identified, and the method of the disclosure described in FIG. 2 may be particularly useful for survivors who are in such physical trouble that they may not directly request rescue.

Referring to FIG. 2, according to an embodiment of the disclosure, an AI server 205 may perform an interaction for service registration for survivor reporting with an MME 207 in operation 210. The interaction for service registration for survivor reporting may include an operation in which the AI server 205 transmits a message for service registration for survivor reporting to the MME 207, and an operation in which the AI server 205 receives a response message to the message for service registration for survivor reporting from the MME 207. A separate interface for the interaction for service registration for survivor reporting may be configured, or the interaction for service registration for survivor reporting may be performed through an API call/invocation between the MME 207 and the AI server 205. In addition, the AI server 205 may operate as an independent NE, or may operate as an application in the NE such as an MME, a RAN intelligence controller (RIC), or service management and orchestration (SMO) of 3GPP and/or ORAN. The service registration or service registration message may include the following information.

### 1) AI server information

The AI server information may be information, if the MME receives a survivor report reported by a UE or a measurement report including a survivor report, used by the MME to identify an address of the server to which the received survivor report or measurement report is to be forwarded. The address of the server may be configured in the form of an IP address or a uniform resource locator (URL) address.

### 2) Location measurement preference information

The location measurement preference information may be information for indicating how the UE will perform location measurement if measuring its location for survivor reporting. The location measurement preference information may indicate any one of a global positioning system (GPS) or hardware (HW) measurement method, or a software (SW)-based measurement method. In particular, the HW measurement method may be used by default, in view of an accurate/precise structure.

### 3) Reporting period information

The reporting period information may be information for indicating a reporting period of the UE if the UE performs the survivor reporting. The reporting period information may indicate any one of periodic reporting or event basis reporting. If the periodic reporting is indicated, the survivor reporting may be performed periodically regardless of occurrence of an emergency disaster situation. If the event basis reporting is indicated, the survivor reporting may be performed every time conditions for the survivor reporting are satisfied.

### 4) Recognition/identification preference information

The recognition/identification preference information may be information for indicating a method used by the UE to recognize/identify the user of the UE who is a survivor in an emergency disaster situation if the UE performs survivor reporting. The recognition/identification preference information may indicate at least one of information such as touch base, voice recognition, and heuristic. If the touch base is used as the user recognition/identification method, if the UE detects a specific screen or button touch at least multiple times, not just once, the UE may identify the user. The UE may perform survivor reporting based on the user identification. If the voice recognition is used as the user recognition/identification method, a specific situation may be considered in which the user of the UE is not able to touch the UE, but the user of the UE may at least command the UE to recognize that he/she is alive through his/her voice. Upon detecting the user voice, the UE may identify the user and perform survivor reporting based on the user identification. If the heuristic is used as the user recognition/identification method, the AI client included in the UE may execute its own solution to determine whether a survivor report is required and/or allow a plug-in 3rd part SW to conduct its own method. In particular, the heuristic method may be considered if the AI client of the UE recognizes/identifies that user activity is not active through the UE.

### 5) Neighboring Info. Reporting mode

The neighboring information reporting mode may be information for indicating whether the survivor report includes measurement results of a neighbor base station/cell of the UE. The neighboring information reporting mode may indicate a value of either Included or No Inclusion. In particular, if the neighboring information reporting mode indicates Included, the survivor report may include measurement result information of the neighbor cell of the UE together with a measurement report of a serving cell, and the measurement result information of the neighbor cell of the UE may be used to obtain the location of the UE.

Referring back to FIG. 2, if an emergency disaster situation occurs, a CBE/CBC 209 may broadcast a warning in operation 215. The CBE/CBC 209 may use a write-replace warning request for the warning broadcasting. Next, the MME 207 may respond to the write-replace warning request for the warning broadcasting received from the CBE/CBC 209 in operation 220, notifying that the request is received and processed successfully. The response from the MME 207 to the CBE/CBC 209 may use a write-replace warning confirm.

Next, if the survivor reporting request is registered from/by the AI server 205 in operation 210, the MME 207 may transmit a write-replace warning request including survivor reporting/survivor reporting initiation which is a new IE, to a RAN 203 in operation 225. The survivor reporting initiation may include the same IE as the IE included in the service registration request described in operation 210.

The RAN 203 may respond to the write-replace warning request received from the MME 207 in operation 235, wherein the response notifies that the request is received and processed successfully. The response from the RAN 203 to the MME 207 may use a write-replace warning response. The RAN 203 may be a RAN AP, and the RAN 203 may be any type of the base station, regardless of whether it is licensed or unlicensed for any wireless communication technology used by the RAN AP.

The RAN 203/RAN AP may transmit a warning message through cell broadcasting or system information in operation 230. That is, the RAN 203/RAN AP transmits to the UE 201 configuration information related to the survivor reporting in an emergency disaster situation/emergency situation, and the configuration information may be transmitted through the cell broadcasting or the system information. Alternatively, a separate standardized interface and/or API call available between the RAN AP and the UE may be used to transmit the configuration information related to the survivor reporting. In particular, in view of interface extension, a separate standardized interface and/or API call available between the RAN AP and the UE may be used to transmit the configuration information related to the survivor reporting. The configuration information transmitted by the RAN 203 to the UE 201 may be information generated based on the IE included in the service registration request explained in operation 210, or the configuration information may include the same IE as the IE included in the service registration request mentioned in operation 210. In the disclosure, the RAN AP is not limited to the RAN AP as defined in 3GPP standard, such as an eNB or a radio network controller (RNC), and the IE described in the disclosure may be also applied to other types of the AP such as a WLAN AP running in an unlicensed spectrum.

After the UE 201 receives the configuration information from the RAN 203, the AI client included in the UE 201 may perform a user recognition/identification algorithm (or, a user pattern recognition algorithm) in operation 240. Based on user identification results, the UE 201 may transmit an (improved) measurement report including a survivor report response IE to the RAN 203 in operation 245. Herein, the survivor report response IE may be also referred to as a survivor report, and may be named as various modified forms to be interpreted substantially identically/similarly. Transmitting the (improved) measurement report including the survivor report response IE at the UE 201 may be also understood as being performed by the AI client included in the UE.

The survivor report response IE/survivor report may include the following information.

### 1) AI Server Information

The AI server information included in the survivor report may be address information of the AI server 205 to which the survivor report transmitted by the UE 201 is forwarded. The address of the AI server 205 may be configured in the form of an IP address or a URL address.

### 2) Location Information report

The location information report included in the survivor report may be information related to the location of the UE 201 measured based on the set location measurement method. The location information report included in the survivor report may be transmitted to a UE of a rescuer by the AI server 205 to rescue the survivor who is the user of the UE 201.

### 3) Reporting period

The reporting period included in the survivor report may be information for indicating the reporting period actually used by the UE 201 for a current survivor report. That is, the reporting period may indicate the reporting period actually used by the UE 201 for the survivor report, among the periodic reporting or the event basis reporting which may be set in operation 210.

### 4) Identification/Recognition

The identification/recognition included in the survivor report may be information for indicating the user identification/recognition method actually used by the UE 201 for the survivor report. That is, the identification/recognition may indicate the user identification/recognition method actually used by the UE 201 for the survivor report, among the user identification/recognition methods which may be set in operation 210.

### 5) Neighboring Info.

The neighboring information may be included in the survivor report if the survivor report is set to include the measurement results for the neighbor base station/cell of the UE in operation 210, and may be information on the measurement results of the UE 201 for the neighbor base station/cell other than the serving base station/cell. The measurement result information of the neighbor base station/cell of the UE 201 may be used to obtain the location of the UE 201.

### 6) Battery remaining

The battery remaining included in the survivor report may be information for indicating remaining battery information of the UE 201 in a specific format. For example, the remaining battery information may be configured in the form of a percentage.

To enable the UE to perform the survivor reporting, other separate message and/or interface may be configured in addition to the (enhanced) measurement report described above.

Next, the RAN 203 may forward the retrieved survivor reporting response extracted from the measurement report received from the UE 201 to the MME 207 in operation 250. Next, the MME 207 may report the survivor reporting response received from the RAN 203 to the AI server 205 in operation 255.

In addition, every time the (enhanced) measurement report including the survivor report is performed by the UE, the AI client of the UE may notify the user of the UE that the survivor reporting is conducted. Also, the AI client of the UE may provide a notification to enable the user to manually stop the survivor reporting.

FIG. 2 assumes the situation in which the RAN AP (the base station) establishes a connection with the UE and operates normally, whereas there may occur a situation in which the RAN AP may not build a connection with the UE and may not operate normally. In this case, introduction of a third communication entity having a RAN AP function and a network connection function may be considered, to replace the role of the base station which is the RAN AP not operating normally. In the disclosure, a flying object may be considered as the third communication entity for replacing the role of the base station which is the RAN AP not operating normally. The flying object may be any flying device in the form of the UAV, and an example of the UAV may include a drone. If the introduction of the UAV for replacing the base station which is the RAN AP is considered, a decryption key may be provided to the UE and the UAV in an authenticated manner to address a security issue. In the disclosure, the situation in which the RAN AP which is the base station may not operate normally may be understood as a concept embracing a case in which a service operator or an authorized organization recognizes or suspects that the RAN AP is not in service. In addition, the UAV may communicate through another connection path toward a satellite and/or a core network (CN) of the service operator.

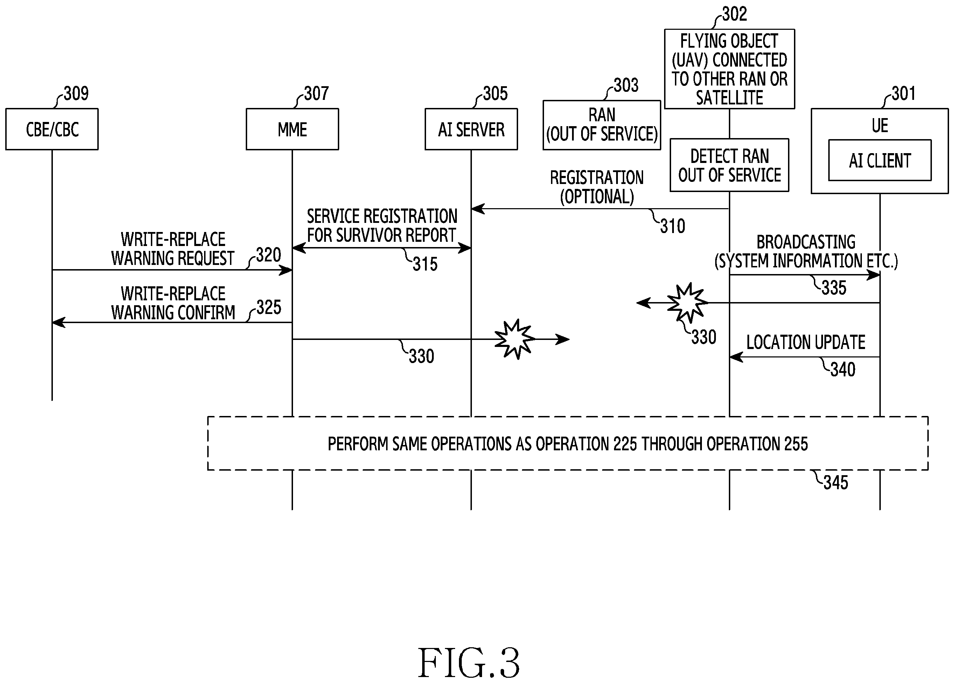

Hereafter, a survivor reporting method in a situation where the RAN AP may not operate normally is described with reference to FIG. 3.

FIG. 3 is a flowchart illustrating another example of performing operations for a survivor rescue service in an emergency disaster situation according to an embodiment of the disclosure.

A UAV 302 for replacing a RAN AP 303 not operating normally may monitor whether the RAN AP 303 is operating by monitoring a pilot signal transmitted by the RAN AP 303 and/or control channels through which system information is broadcast. At this time, deployment of the UAV 302 is executed if there is no response to a write-replace warning request (see operation 235 in FIG. 2) continuously, if the faulty RAN AP 303 is out of service based on its self-diagnosis, or if a neighbor RAN AP of the faulty RAN AP 303 detects disconnections of the RAN AP 303.

Monitoring whether the RAN AP 303 of the UAV 302 is operating may be performed for several minutes, for several hours, or immediately (as preset by the operator). If the UAV 302 is not able to receive any signal and/or channel from the RAN AP 303, the UAV 302 may detect that the RAN AP 303 is not operating normally, that is, is out of service, and at this time, may request its registration from the AI server in operation 310, which is optional. The AI server 305 may perform an interaction for service registration for survivor reporting with an MME 307 in operation 315. The interaction for service registration for survivor reporting may include transmitting a message for service registration for survivor reporting from the AI server 305 to the MME 307, and receiving a response message for the message for service registration for survivor reporting at the AI server 305 from the MME 307. Next, if an emergency disaster situation occurs, a CBE/CBC 309 may initiate warning broadcasting in operation 320. The CBE/CBC 309 may use a write-replace warning request for the warning broadcasting. Next, the MME 307 may respond to the write-replace warning request for the warning broadcasting received from the CBE/CBC 309 in operation 325, and the response may notify that the request is successfully received and processed. The write-replace warning confirm may be used as the response from the MME 207 to the CBE/CBC 209. Operation 330 of FIG. 3 corresponds to the out-of-service RAN AP 303, and indicates that signal transmission from the MME 307 to the RAN AP 303 and signal transmission from the UE 301 to the RAN AP 303 fail.

Meanwhile, the UAV 302 may notify that the UAV 302 operates as an AP in place of the RAN AP 303 by initiating system information broadcasting in operation 335. Next, the UE 301 may obtain that the UAV 302 operates in place of the RAN AP 303, and update the location of the UE to the UAV 302, by transmitting a survivor report to the UAV 302, rather than the RAN AP 303, replacing the RAN AP 303.

Next, the MME 307, the AI server 305, and the UAV 302 replacing the RAN AP 303 and the UEs 301 may perform the same operations as operation 225 through operation 255 described in FIG. 2 in operation 345.

The UAV replacing the RAN AP may use satellite connectivity or citizens broadband radio service (CBRS) frequencies to establish connection to the core network of the survivor reporting service operator. In addition, the UAV may provide RAN AP connectivity to the UE using the CBRS frequencies.

The UAV, which must not interfere with operations of neighbor APs, may need to identify whether not only the faulty AP but also the neighbor APs malfunction by monitoring an operating frequency band.

If the UAV is not able to service any more in place of the RAN AP (e.g., due to low battery and/or network connection failure), it may instruct the UE (or its AI client) to find another AP or another UAV. In so doing, if searching for an alternative serving cell and acquiring an alternative serving cell, the UE may reconnect to the serving cell newly acquired.

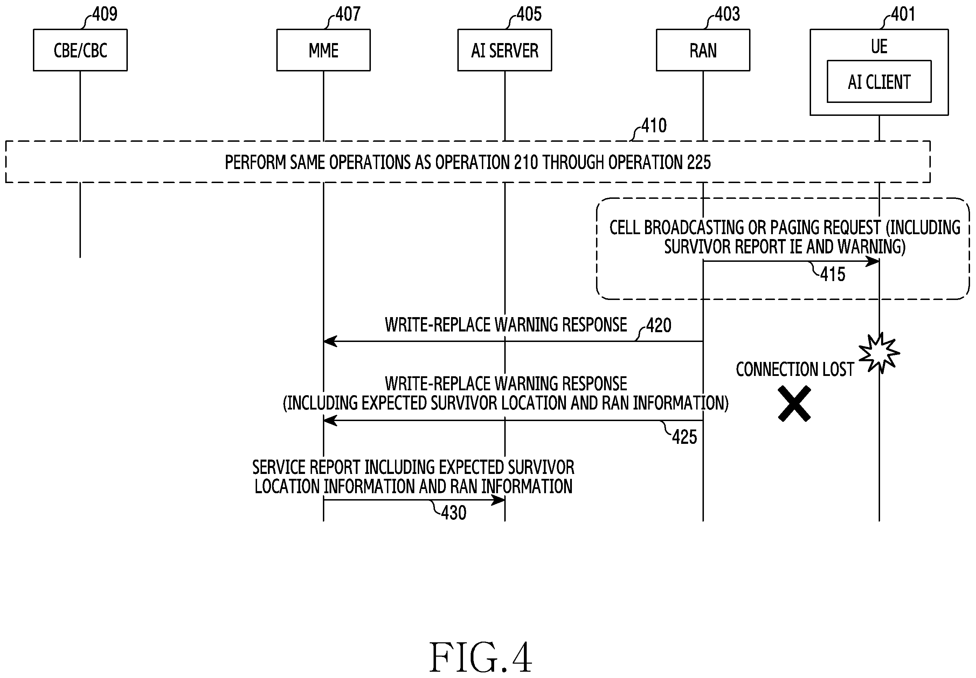

Hereafter, with reference to FIG. 4, a method which may be performed if a RAN AP is not able to receive a survivor report from a UE is described. According to an embodiment of the disclosure, even if not receiving the survivor report including the location of the UE from the UE, the RAN AP may transmit an approximate location of the UE to the AI server via the MME.

FIG. 4 is a diagram illustrating yet another example of performing a survivor reporting method according to an embodiment of the disclosure.

Referring to FIG. 4, operations described in FIG. 4 may be conducted after operation 210 through operation 225 of FIG. 2 are performed in operation 410.

A RAN 403 may transmit a cell broadcasting or paging request including a survivor report IE and a warning notifying occurrence of an emergency disaster situation to a UE 401. In addition, the RAN 403 may transmit a write-replace warning response to an MME 407 in operation 420. Next, if connection of the UE 401 to the RAN 403 is lost, the RAN 403 may identify that the survivor report of the UE 401 may not be received. In this case, a device mounted in the RAN, such as a gyroscope sensor, may be used for the RAN 403 to identify that the survivor report of the UE 401 may not be received.

In particular, while the RAN 403 is not able to receive the survivor report of the UE 401, the RAN 403 may anonymously perform operation 250 of FIG. 2 to report the emergency situation occurring around its AP to the MME in operation 425, without a preceding step initiated by the AI server as in operations 215 through 225 of FIG. 2. In this case, the MME 407 may directly forward to an AI server together with an indication that the report received from the RAN 403 is anonymous in operation 430. In so doing, the RAN AP 403, which may not know the UE location measured by the UE 401, may use a parameter related to the UE location to estimate the UE location. The parameter related to the UE location used by the RAN AP 403 to estimate the UE location may include a beamforming related parameter applied to signal transmission to the UE 401 served most recently. Herein, the beamforming related parameter may include a beam timing offset and a beam index. In operations 425 and 430 of FIG. 4, the RAN AP 403 may forward the estimated location of the UE 401 on a premise that the UE 401 is previously served but still resides its serving area, instead of the information reported from the UE 401.

It may be assumed that the UE 401 actually resides in the serving area only if a specific time passes compared to the last reported time. The present invention defines that the specific time value may be set from minutes to infinity, but an actual operating value is autonomously set by each RAN AP operator depending on network configuration optimization.

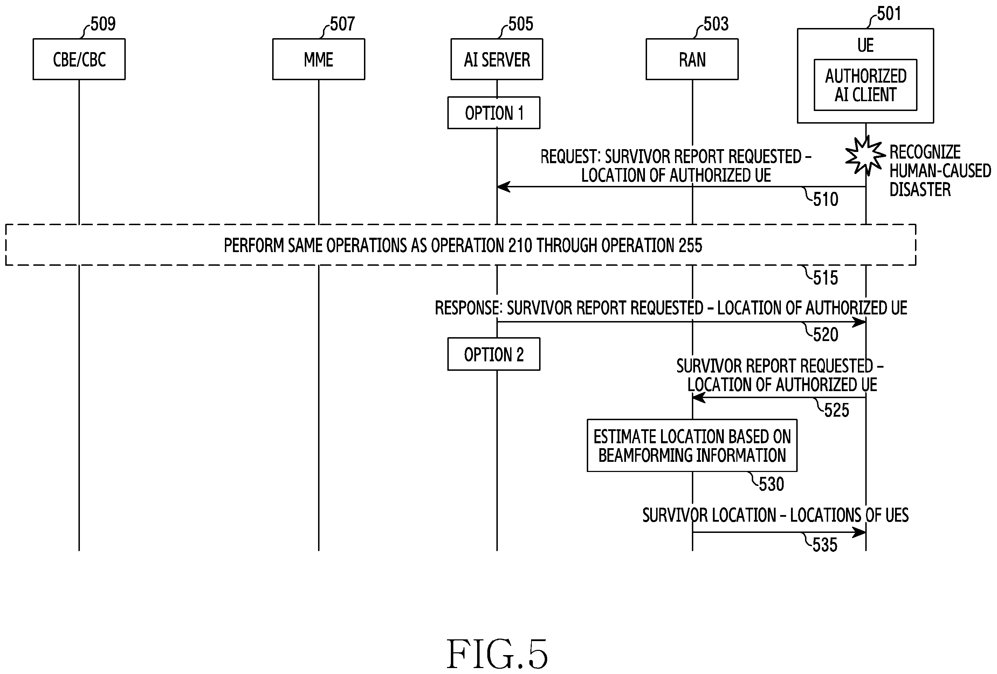

Hereafter, with reference to FIG. 5, a method for triggering a survivor report by a UE of a rescuer in an emergency disaster situation is described. the UE of the rescuer in the emergency disaster situation may be referred to as an authorized UE.

FIG. 5 is a diagram illustrating still another example of performing a survivor reporting method according to an embodiment of the disclosure.

Referring to FIG. 5, a UE 501 of the rescuer triggers survivor reporting, which may use any one of a method in which the UE 501 requests a survivor report trigger from an AI server 505 (option 1) and a method in which the UE 501 directly requests a survivor report trigger from a RAN 503 (option 2).

First, in the option 1, the UE 501 may request a survivor report trigger from the AI server 505 in operation 510. At this time, the survivor report trigger request may be a request from the UE 501 to the AI server 505 to transmit to itself a survivor report of at least one other UE managed/stored by the AI server 505. Next, the same operations as operation 210 through operation 255 of FIG. 2 may be performed in operation 515. Next, the UE 501 may receive from the AI server 505 a response including the survivor report of at least one other UE in operation 520.

Next, in the option 2, the UE 501 may request a survivor report trigger from the RAN 503 in operation 525. At this time, the RAN 503 needs to inform its serving terminal that it supports a method of including an indication in broadcasting information, and needs to provide an estimation function for roughly calculating the UE location based on an internal source such as beamforming. The RAN 503 receiving the survivor report trigger from the UE 501 may estimate approximate locations of its serving UEs, based on beamforming information in operation 530. Next, the RAN 503 may transmit to the UE 501 a response including location information of its serving UEs in operation 535. In addition, the RAN 503 may connect to a neighbor RAN, to report the locations of the serving UEs to the UE 501 which transmits the survivor report trigger request. In so doing, the neighbor RAN may transmit location information of its serving UEs to the RAN 503. In this case, the response transmitted by the RAN 503 to the UE 501 transmitting the survivor report trigger request may include the location information of the UEs served by the neighbor RAN received from the neighbor RAN. The RAN 503 may collect location information of the UEs received from the neighbor RAN, and transmit it to the UE 501 by including in one response message, or individually transmit the location information of the UEs received from the neighbor RAN to the UE 501.

Hereafter, operating algorithms of the AI server and the AI client of the UE performing the survivor reporting are described.

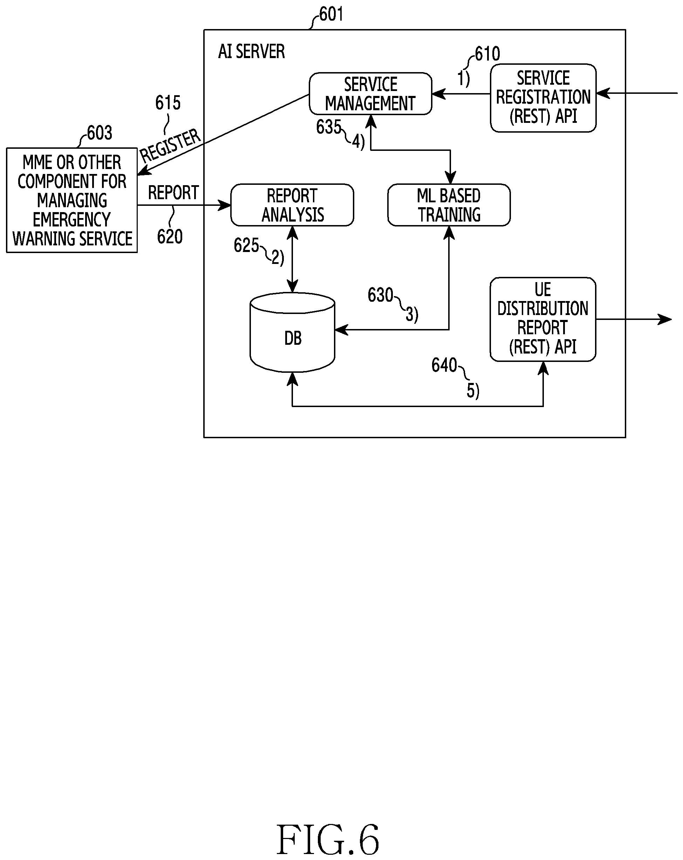

First, referring to FIG. 6, an embodiment of the configuration of the AI server is described.

FIG. 6 is a diagram illustrating an example of an AI server configuration according to an embodiment of the disclosure.

Referring to FIG. 6, an AI server 601 may include the following main components, and operate as described below.

Service Administration: This component primarily addresses interactions with an MME 603 to initiate survivor reporting and ML-based training management in operations 615 and 635 for algorithm operations relating to service registration in operation 610 and report analysis.

Report Analysis: This component first analyzes a survivor report 620 transmitted by a UE. Next, this component may provide a UE distribution report in operation 640 to be provided to an external component (or a server) requesting service registration through a service registration (REST) API call and/or some type of an external interface. In addition, this component may manage the analyzed report details in a database (DB) in operation 625.

Hereafter, an algorithm for the AI server to determine an appropriate reporting period for the UE performing the survivor reporting to use for its survivor report, and an algorithm for the AI server to determine an appropriate survivor identification method for the UE to use for survivor identification are described.

First, the algorithm for the AI server to determine the appropriate reporting period to be used by the UE performing the survivor reporting for the survivor report is explained.

Inputs to the algorithm for determining the UE reporting period of the AI server may be as follows.
1) The number of reports for Reporting Period = Periodic Report
2) The number of reports in reporting period = Event base reporting
3) The percentage of the reports without movements among all reports
4) Air condition related information - Frequency interference, SINR and so on, which have also been collected from the reporting previously

An output from the algorithm for determining the UE reporting period of the AI server may be as follows.
1) (Recommended) Reporting Period = Periodic or Event base reporting

To determine the UE reporting period, the AI server may use any type of an algorithm such as a dense neural network (DNN), a convolution neural network (CNN), or a low-cost simple algorithm. The number of layers and an activation function of the neural network (NN) may be a function such as rectified linear unit (Relu).

Next, the algorithm for the AI server to determine an appropriate survivor identification method for the UE to use for survivor identification is explained.

An AI-based engine may run on the AI server (or the AI client) to learn and determine in real time. Also, even a mechanism which is not a real-time mechanism may tolerate delay over tens of seconds or more. If the AI server does not instruct the UE in relation to a specific survivor identification method, the UE may directly select an appropriate survivor identification method. The algorithm for the AI server to determine an appropriate survivor identification method for the UE to use for survivor identification may be also used on the UE.

Inputs to the algorithm for the AI server to determine an appropriate survivor identification method for the UE to use for survivor identification are as follows.
Input 1: The average interval of screen touch by users previously over the same hour at old days
Input 2: The last interval of no movement of the UE user. Herein, no movement of the UE user may be regarded as no holding of mobiles.
Input 3: The change interval of mobile gyroscope by users previously over the same hour at old days

Additional Input (optional) - Sort of the traffic use pattern. For example, the traffic use pattern may include a factor such as video watching, web browsing or video calling, video gaming, gallery viewing, document reading, time factor, music listening, working days or weekdays, holidays or non-holiday days, or country.

Outputs from the algorithm for the AI server to determine an appropriate survivor identification method for the UE to use for survivor identification are as follows.
1) Suggestion one among Heuristic, Screen Touch or Voice Recognition as a survivor identification method.
2) Prediction of being active or not active, sleeping or working or gym or walking or relaxing. This output may be provided if an additional input is given.

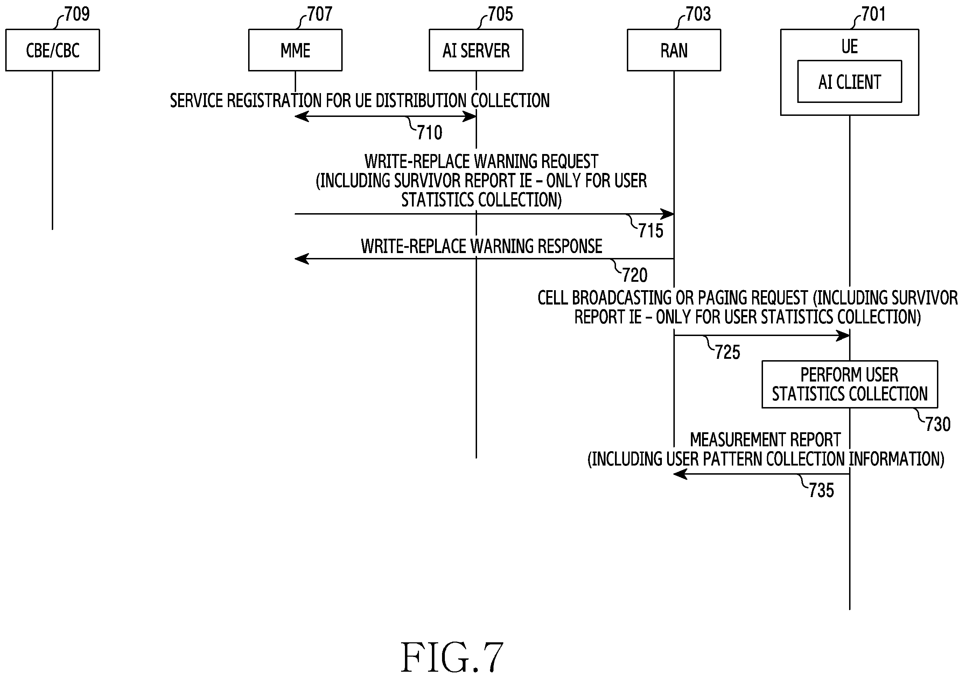

To determine the survivor identification method of the UE, the AI server may use an ML/AI-based selection algorithm. In principle, the selection algorithm may apply a different weight to each input, for the three main inputs described above. For example, weights may be given in the form of input 1 > input 2 > input 3. This is merely an example, and the weight may be assigned in other various forms. To determine the survivor identification method of the UE, the AI server may collect information of the aforementioned inputs from the UE. The information of the inputs may be referred to as user pattern collection information. Referring to FIG. 7, operations of the AI server for collecting selection algorithm inputs to determine the survivor identification method of the UE will be described.

FIG. 7 is a flowchart of performing a method for collecting selection algorithm inputs to determine a survivor identification method at an AI server according to an embodiment of the disclosure.

Referring to FIG. 7, it may be noted that a CBE/CBC 709 does not involve in corresponding operations, in the method of the AI server for collecting selection algorithm inputs to determine a survivor identification method.

The AI server 705 may perform a service registration procedure to collect information related to UE distribution/selection algorithm inputs with an MME 707 in operation 710.

Next, the MME 707 may transmit a write-replace warning request, including a survivor report IE, for user statistics collection to a RAN 703 in operation 715, and the RAN may transmit a write-replace warning response in response thereto in operation 720.

The RAN 703 may transmit a cell broadcast or paging request, including the survivor report IE, for statistical count of a UE 701 to the UE 701 in operation 725.

The UE 701 may perform user statistics collection in operation 730. In addition, the UE 701 may transmit to the RAN 703 a measurement report including user pattern collection information obtained through the user statistics collection in operation 735. The user pattern collection information may be used as an input for the selection algorithm in the AI server.

The RAN 703 may transmit to the MME 707 a write-replace warning response including the user pattern collection information received from the UE 701 in operation 740. The MME 707 may transmit a service report including the received user pattern collection information to the AI server 705 in operation 745. The AI server may use the user pattern collection information received from the MME 707 as the input to the selection algorithm for determining the user identification method of the UE.

An interface used by the AI server 705 to trigger the user pattern collection may be the same interface as an interface used by the AI server 705 to trigger the survivor reporting. Also, in the method of FIG. 7, start and end of the corresponding operation may be triggered in a (pre)scheduled manner or as needed. In addition, to prevent traffic surge due to a considerable amount of reports collected and reported from a great number of UEs, the UE may be able to arbitrarily determine the reporting time, or may be able to support a function of performing the reporting if there is no traffic or no active voice traffic in (pre)scheduling.

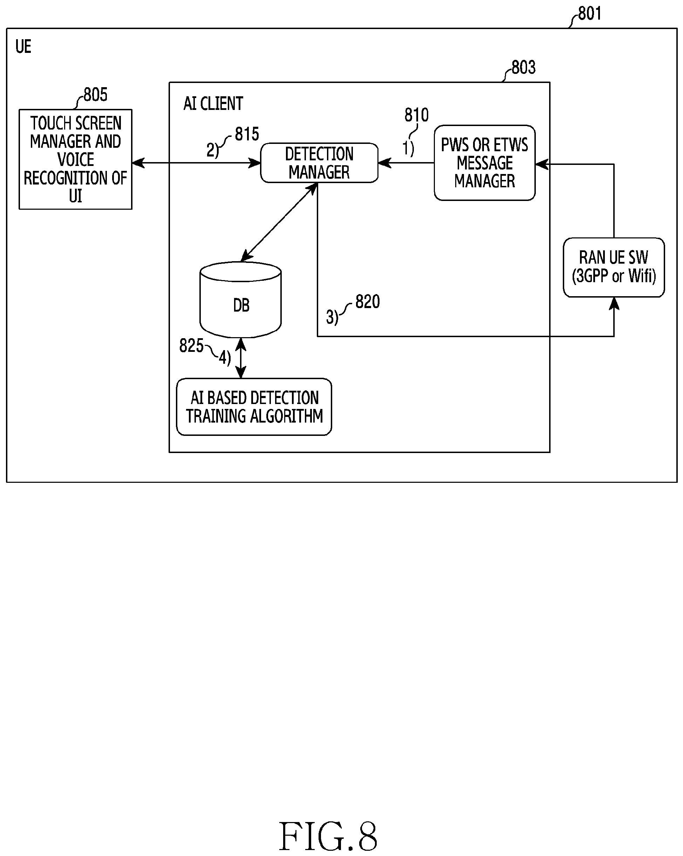

Hereafter, a survivor identification algorithm in the AI client of the UE is described with reference to FIG. 8.

FIG. 8 is a diagram illustrating an example of a UE AI client configuration for performing survivor identification according to an embodiment of the disclosure.

Referring to FIG. 8, an AI client 803 of a UE 801 may manage information detected in operation 805 through a touch screen and a voice recognition function of a user interface (UI) of the UE in operation 815. In addition, the AI client 803 of the UE 801 may include a detection manager connected to a RAN UE software in operation 820 and receiving a message transmitted from a PWS or ETWS message manager in operation 810. Besides, information generated by the detection manager may be stored and managed in a DB. Further, the AI client 803 includes an AI-based detection training algorithm, and the AI-based detection training algorithm may be configured as shown in the following Table 1.

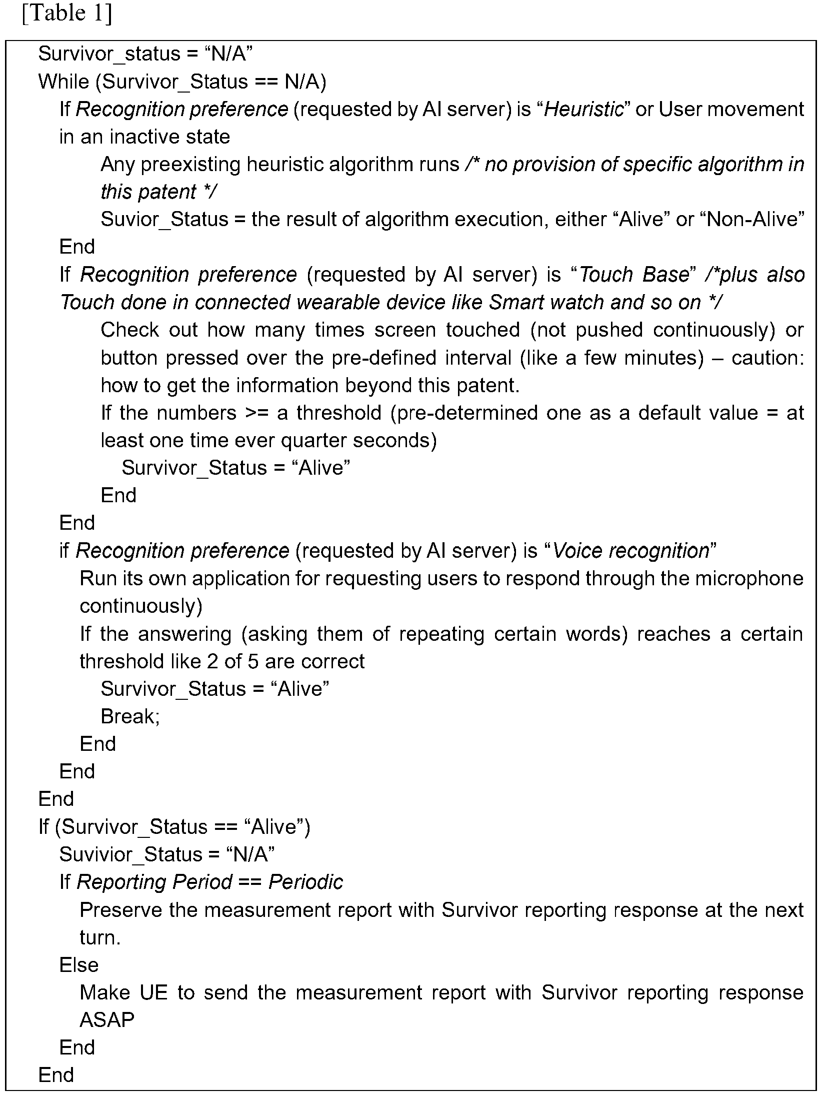

The AI-based detection training algorithm may include individual operations set to derive a result on whether or not the survivor is alive based on the survivor identification method, and may include a measurement reporting operation based on the result on whether the survivor is alive or not.

In addition, to avoid false detection/false sensing at the AI client, the AI-based pattern recognition detection may continuously learn all previous patterns of the user's screen input or button touch (or any kind of phone access) monitored by the AI-based pattern recognition. The AI client may be configured to call an API of an external algorithm provided by the UE to avoid false detection/false sensing. Otherwise, the AI client, which should process as if there is no algorithm, may need to always avoid false warning.

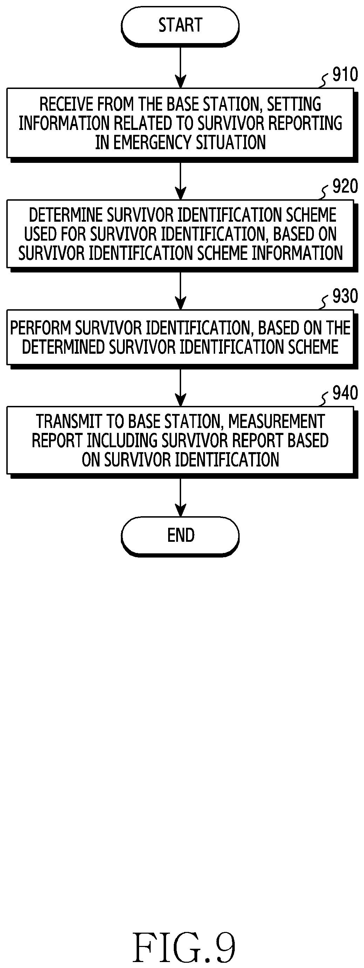

FIG. 9 is a diagram for explaining a survivor reporting method of a UE according to an embodiment of the disclosure.

According to an embodiment, the UE may receive from the base station, configuration information related to the survivor reporting in an emergency situation in operation 910.

The configuration information may include at least one of information on the location measurement method of the UE or information on the survivor identification method used for survivor identification to determine that a user of the UE is in the emergency situation.

According to an embodiment, the UE may determine the survivor identification method used for the survivor identification, based on the information of the survivor identification method in operation 920.

According to an embodiment, the UE may perform the survivor identification, based on the determined survivor identification method in operation 930.

According to an embodiment, the UE may transmit to the base station, a measurement report including the survivor report, based on the survivor identification in operation 940.

At this time, the survivor report may include at least one of information of the survivor identification method used by the UE or location information of the UE measured based on the location measurement method determined based on the information of the location measurement method of the UE.

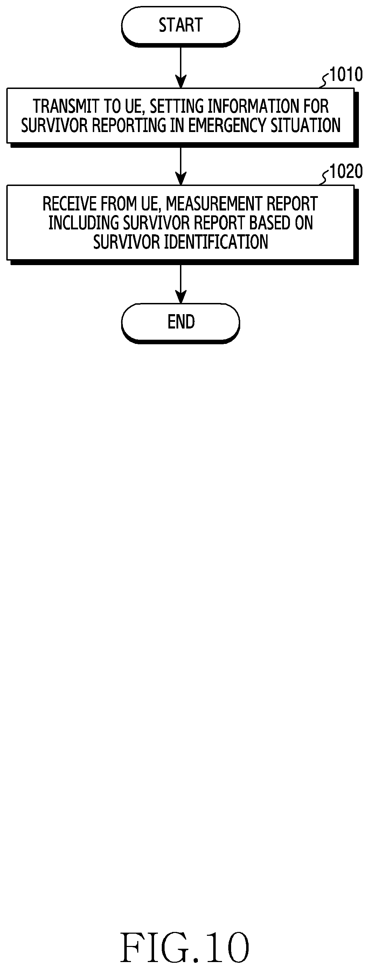

FIG. 10 is a diagram for explaining a survivor reporting method of a base station according to an embodiment of the disclosure.

In an embodiment, the base station may transmit to the UE, configuration information related to survivor reporting in an emergency situation in operation 1010.

At this time, the configuration information may include at least one of information on a location measurement method of the UE or information on a survivor identification method used for survivor identification to determine that a user of the UE is in the emergency situation.

According to an embodiment, the base station may receive from the UE, a measurement report including the survivor report based on the survivor identification in operation 920.

Herein, the survivor report may include at least one of information of the survivor identification method used by the UE determined based on information of the survivor identification method or location information of the UE measured based on a location measurement method determined based on information of the location measurement method of the UE.

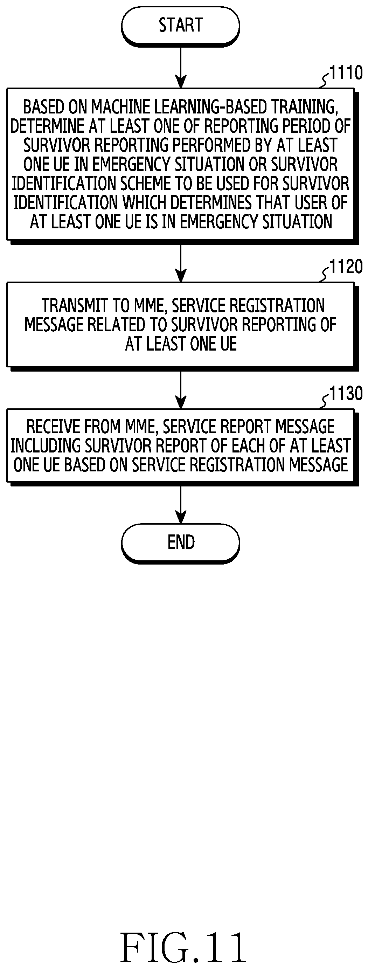

FIG. 11 is a diagram for explaining a survivor reporting method of an AI server according to an embodiment of the disclosure.

According to an embodiment, based on machine learning-based training, the AI server may determine at least one of a reporting period of the survivor reporting performed by at least one UE in an emergency situation or a survivor identification method to be used by the at least one UE for survivor identification to determine that a user of the at least one UE is in the emergency situation in operation 1110.

According to an embodiment, the AI server may transmit to the MME a service registration message related to the survivor reporting of the at least one UE in operation 1120.

At this time, the service registration message may include at least one of information of the reporting period, information of the survivor identification method, determined based on the machine learning-based training, or information on a location measurement method of the at least one UE.

According to an embodiment, the AI server may receive from the MME a service report message including a survivor report of each of the at least one UE based on the service registration message in operation 1130.

Herein, the survivor report of each of the at least one UE may include at least one of the reporting period information, the information of the survivor identification method used by each of the at least one UE determined based on the survivor identification method information, or location information of each of the at least one UE measured based on the location measurement method determined based on the location measurement method information.

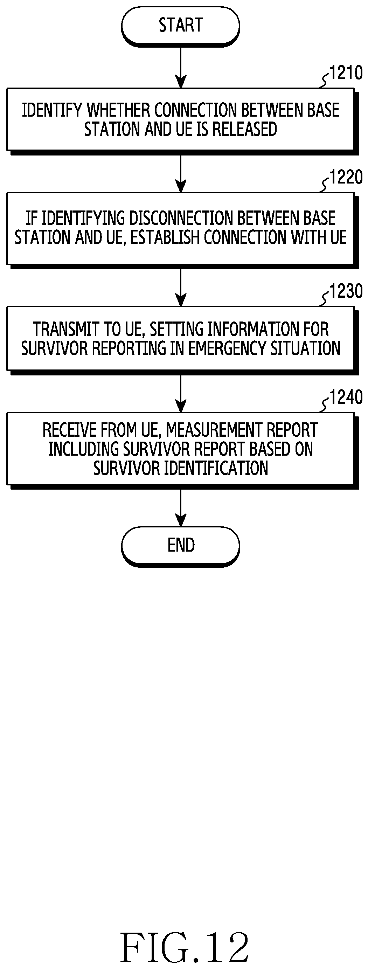

FIG. 12 is a diagram for explaining a survivor reporting method of a UAV according to an embodiment of the disclosure.

In an embodiment, the UAV may identify whether the connection between the base station and the UE is released in operation 1210.

In an embodiment, if identifying the disconnection between the base station and the UE, the UAV may establish a connection with the UE in operation 1220.

In an embodiment, the UAV may transmit to the UE, configuration information related to the survivor reporting in an emergency situation in operation 1230.

Herein, the configuration information may include at least one of location measurement method information of the UE or information of a survivor identification method used for survivor identification to determine that a user of the UE is in the emergency situation.

According to an embodiment, the UAV may receive from the UE, a measurement report including a survivor report based on the survivor identification in operation 1240.

Herein, the survivor report may include at least one of the survivor identification method information used by the UE determined based on the survivor identification method information or location information of the UE measured based on the location measurement method determined based on the location measurement method information of the UE.

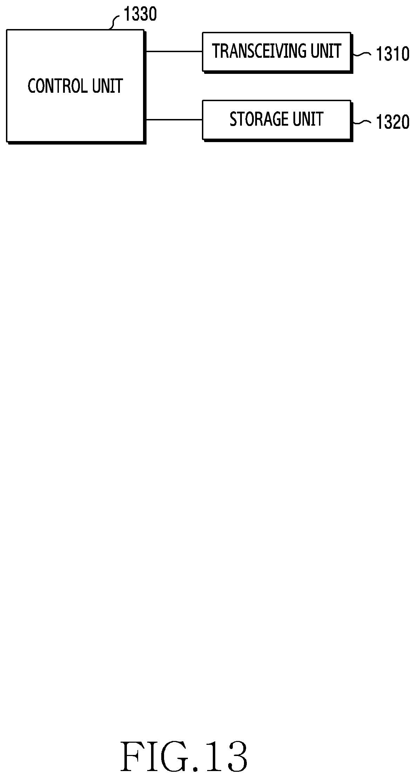

FIG. 13 is a diagram illustrating a structure of a base station according to an embodiment of the disclosure.

Referring to FIG. 13, the base station of the disclosure may include a transceiving unit 1310, a storage unit 1320, and a control unit 1330. The transceiving unit 1310, the storage unit 1320, and the control unit 1330 of the base station may operate according to the communication method of the base station described above. However, the components of the base station are not limited to the example mentioned above. For example, the base station may include more components or fewer components than the aforementioned components.

The transceiving unit 1310 collectively refers to a receiving unit of the base station and a transmitting unit of the base station, and may transmit and receive signals with a UE and/or other network entity. The signal transmitted and received with the UE and/or other network entity may include control information and data. For doing so, the transceiving unit 1310 may be configured with an RF transmitter for up-converting and amplifying a frequency of the transmitted signal, an RF receiver for low-noise-amplifying a received signal and downconverting the frequency, and so on. However, this is only an embodiment of the transceiving unit 1310, and the components of the transceiving unit 1310 are not limited to the RF transmitter and the RF receiver. In addition, the transceiving unit 1310 may include various configurations for transmitting and receiving signals. In addition, the transceiving unit 1310 may receive a signal over a wired/wireless channel, output it to the control unit 1330, and transmit a signal outputted from the control unit 1330 over the wired/wireless channel.

The storage unit 1320 may store a program and data required for the operation of the base station. In addition, the storage unit 1320 may store control information or data included in a signal obtained at the base station. The storage unit 1320 may be configured as a storage medium such as a read only memory (ROM), a random access memory (RAM), a hard disk, a compact disk (CD)-ROM, and a digital versatile disk (DVD), or a combination of storage media.

The control unit 1330 may control a series of processes enabling the base station to operate according to the embodiment of the disclosure described above. The control unit 1330 may include at least one processor.

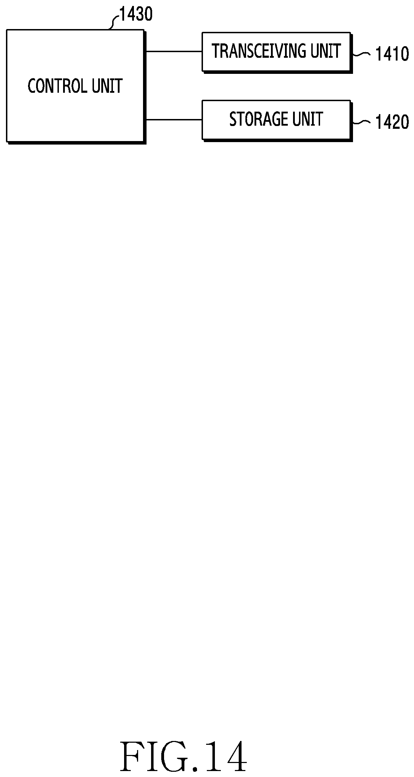

FIG. 14 is a diagram illustrating a structure of a UE according to an embodiment of the disclosure.

Referring to FIG. 14, the UE of the disclosure may include a transceiving unit 1410, a storage unit 1420, and a control unit 1430. The transceiving unit 1410, the storage unit 1420, and the control unit 1430 of the UE may operate according to the communication method of the UE mentioned above. However, the components of the UE are not limited to the example described above. For example, the UE may include more components or fewer components than the aforementioned components. Besides, the transceiving unit 1410, the storage unit 1420, and the control unit 1430 may be implemented in the form of a single chip.

The transceiving unit 1410 collectively refers to a receiving unit of the UE and a transmitting unit of the UE, and may transmit and receive signals with a base station or a network entity. The signal transmitted and received with the base station may include control information and data. For doing so, the transceiving unit 1410 may be configured with an RF transmitter for up-converting and amplifying a frequency of the transmitted signal, and an RF receiver for low-noise-amplifying and frequency-converting the received signal. However, this is only an embodiment of the transceiving unit 1410, and the components of the transceiving unit 1410 are not limited to the RF transmitter and the RF receiver. In addition, the transceiving unit 1410 may include various configurations for transmitting and receiving signals. In addition, the transceiving unit 1410 may receive a signal over a wireless channel, output it to the control unit 1430, and transmit a signal outputted from the control unit 1430 over the wireless channel.

Further, the transceiving unit 1410 may receive and output a communication signal to the control unit, and transmit a signal outputted from the control unit to a network entity via a wired or wireless network.

The storage unit 1420 may store a program and data required for the operation of the UE. In addition, the storage unit 1420 may store control information or data included in a signal obtained at the UE. The storage unit 1420 may include a storage medium such as a ROM, a RAM, a hard disk, a CD-ROM, and a DVD, or a combination of storage media.

The control unit 1430 may control a series of processes enabling the UE to operate according to the embodiment of the disclosure described above. The control unit 1430 may include at least one processor. For example, the control unit 1430 may include a communication processor (CP) controlling for the communication and an AP for controlling an upper layer such as an application program.

According to an embodiment of the disclosure, a server in a wireless communication system may, based on machine learning-based training, determine at least one of a reporting period of survivor reporting performed by at least one user equipment in an emergency situation or a survivor identification method to be used for survivor identification which determines that a user of the at least one user equipment is in the emergency situation, and transmit to an MME, a service registration message related to the survivor reporting of the at least one user equipment, and the service registration message may include at least one of information of the reporting period, information of the survivor identification method, or location measurement method information of the at least one user equipment, determined based on the machine learning-based training. The server may receive from the MME, a service report message including a survivor report of each of the at least one user equipment based on the service registration message, and the survivor report of each of the at least one equipment may include at least one of the reporting period information, information of the survivor identification method used by each of the at least one user equipment determined based on the survivor identification method information, or location information of each of the at least one user equipment measured based on a location measurement method determined based on the location measurement method information.

According to an embodiment of the disclosure, the service registration information may further include at least one of address information of the server or information of whether the survivor report contains measurement results of a neighbor base station of each of the at least one user equipment, and the survivor report may further include at least one of the address information of the server, remaining battery capacity information of each of the at least one user equipment, or measurement results for the neighbor base station of each of the at least one user equipment.

According to an embodiment of the disclosure, the server may receive from the MME, a service report message including an estimation value for the location of each of the at least one user equipment estimated based on terminal location-related parameters.

According to an embodiment of the disclosure, the terminal location related parameters may include beamforming related parameters applied to signal transmission from at least one base station related to the at least one user equipment to the at least one user equipment, and the beamforming related parameters may include a beam offset and a beam index applied to the latest communication of the at least one base station and the at least one user equipment.

According to an embodiment of the disclosure, the server may receive from a specific user equipment other than the at least one user equipment, a message for requesting a survivor report of each of the at least one user equipment, and transmit to the specific user equipment, a response including a survivor report of each of the at least one user equipment.

According to an embodiment of the disclosure, an UAV in a wireless communication system may identify whether a connection of a base station and a user equipment is released, establish a connection with the user equipment, if identifying that the connection of the base station and the user equipment is released, and transmit to the user equipment, configuration information related to survivor reporting in an emergency situation, and the configuration information may include at least one of location measurement method information of the user equipment or survivor identification method information used for survivor identification to determine that a user of the user equipment is in the emergency situation. The UAV may receive from the user equipment, a measurement report including the survivor report based on the survivor identification, and the survivor report may include at least one of information of the survivor identification method used by the user equipment determined based on the survivor identification method information or location information of the user equipment measured based on a location measurement method based on the location measurement method information of the user equipment.

According to an embodiment of the disclosure, the UAV may identify whether the UAV may provide a survivor reporting service in place of the base station, and if identifying that the UAV is not able to provide the survivor reporting service in place of the base station, transmit to the user equipment a message instructing to search for another base station and/or another UAV to receive the survivor reporting service. An operating frequency band of the UAV related to the survivor reporting and an operating frequency band of the base station related to the survivor reporting may be identical or different frequency bands, and a decryption key used by the user equipment may be provided to the UAV.

According to an embodiment of the disclosure, a user equipment in a wireless communication system may include a transceiver configured to transmit and receive a signal; and at least one processor connected to the transceiver, the at least one processor may be configured to receive from a base station, configuration information related to survivor reporting in an emergency situation, the configuration information including at least one of location measurement method information of the user equipment or information of a survivor identification method used for survivor identification to determine that a user of the user equipment is in the emergency situation; determine the survivor identification method used for the survivor identification, based on the survivor identification method information; perform the survivor identification based on the determined survivor identification method; and transmit to the base station, a measurement report including the survivor report, based on the survivor identification, and the survivor report may include at least one of the survivor identification method information used by the user equipment or location information of the user equipment measured based on a location measurement method determined based on location measurement method information of the user equipment.

According to an embodiment of the disclosure, a base station in a wireless communication system may include a transceiver configured to transmit and receive a signal; and at least one processor connected to the transceiver, the at least one processor may be configured to transmit to a user equipment, configuration information related to survivor reporting in an emergency situation, the configuration information including at least one of location measurement method information of the user equipment or information of a survivor identification method used for survivor identification to determine that a user of the user equipment is in the emergency situation; and transmit from the user equipment, a measurement report including the survivor report based on the survivor identification, and the survivor report may include at least one of the survivor identification method information used by the user equipment based on the survivor identification method information or location information of the user equipment measured based on a location measurement method determined based on location measurement method information of the user equipment.

It should be noted that the above-described diagrams, the exemplary diagrams of the control/data signal transmission method, the exemplary diagrams of the operation procedure, and the configuration diagrams are not intended to limit the scope of the claims of the disclosure. That is, it shall not be interpreted that all components, entities, or operations described in the embodiments of the disclosure are essential components for executing the disclosure, and may be implemented by including only some components without impairing the essence of the disclosure. In addition, each of the embodiments may be operated in combination with each other as needed. For example, the network entity and the UE may be operated by combining some of the methods described in the disclosure.

The operations of the base station or the UE mentioned above may be realized by providing a memory device storing corresponding program code in a specific unit of the base station or the UE. That is, the control unit of the base station or the UE may carry out the aforementioned operations by reading and executing the program code stored in the memory device by means of a processor or a CPU.

Various components or modules in an entity, a base station, or a terminal described in the disclosure may operate by using a hardware circuit, for example, a complementary metal oxide semiconductor-based logic circuit, firmware and software and/or a hardware circuit such as a combination of hardware, firmware, and/or software embedded into a machine-readable medium. For example, various electrical structures and methods may be carried out by using electrical circuits such as transistors, logic gates, and ASICs.

As for the software, a computer-readable storage medium storing one or more programs (software modules) may be provided. One or more programs stored in the computer-readable storage medium may be configured for execution by one or more processors of an electronic device. One or more programs may include instructions for controlling an electronic device to execute the methods according to the embodiments described in the claims or the specification of the disclosure.

Such a program (software module, software) may be stored to a random access memory, a non-volatile memory including a flash memory, a ROM, an electrically erasable programmable ROM (EEPROM), a magnetic disc storage device, a CD-ROM, DVDs or other optical storage device, and a magnetic cassette. Alternatively, it may be stored to a memory combining part or all of those recording media. In addition, a plurality of memories may be included.

Also, the program may be stored in an attachable storage device accessible via a communication network such as internet, intranet, local area network (LAN), wide LAN (WLAN), or storage area network (SAN), or a communication network by combining these networks. Such a storage device may access a device which executes an embodiment of the disclosure through an external port. In addition, a separate storage device on the communication network may access the device which executes an embodiment of the disclosure.

In the specific embodiments of the disclosure, the components included in the disclosure are expressed in a singular or plural form. However, the singular or plural expression is appropriately selected according to a proposed situation for the sake of explanation, the disclosure is not limited to a single component or a plurality of components, the components expressed in the plural form may be configured as a single component, and the components expressed in the singular form may be configured as a plurality of components.

Meanwhile, while the specific embodiment has been described in the explanations of the disclosure, it will be noted that various changes may be made therein without departing from the scope of the disclosure. Hence, the scope of the disclosure is not defined by the embodiments of the disclosure but by the claims and equivalents thereof falling within the scope of the disclosure. That is, it will be obvious to one of ordinary skill in the art that various modifications may be made based on the technical scope of the disclosure. Also, the embodiments may be combined if necessary. For example, some of the methods explained in the disclosure may be combined with each other to operate the base station and the UE. Also, although the embodiments of the disclosure are suggested based on the 5G and NR systems, other modifications based on the technical ideas of the embodiments of the disclosure may be applied to other communication systems such as LTE, LTE-A, and LTE-A-Pro systems.

Meanwhile, while the specific embodiment has been described in the explanations of the disclosure, it will be noted that various changes may be made therein without departing from the scope of the disclosure. Therefore, the scope of the disclosure is not limited and defined by the described embodiment and is defined by not only the scope of the claims as below but also their equivalents.

## Claims

1. A method performed by a user equipment in a wireless communication system, comprising:
receiving from a base station, configuration information related to survivor reporting in an emergency situation,
wherein the configuration information comprising at least one of location measurement method information of the user equipment or information of a survivor identification method used for survivor identification to determine that a user of the user equipment is in the emergency situation;
determining the survivor identification method used for the survivor identification, based on the survivor identification method information;
performing the survivor identification based on the determined survivor identification method; and
transmitting to the base station, a measurement report comprising the survivor report, based on the survivor identification,
wherein the survivor report comprises at least one of the survivor identification method information used by the user equipment or location information of the user equipment measured based on a location measurement method determined based on location measurement method information of the user equipment.

2. The method of claim 1, wherein the configuration information further comprises at least one of address information of a server to which the survivor report is transmitted, reporting period information of the survivor report, or information of whether the survivor report contains measurement results of a neighbor base station of the user equipment, and
the survivor report further comprises at least one of the address information of the server, the reporting period information, remaining battery capacity information of the user equipment, or the measurement results for the neighbor base station.

3. The method of claim 1, wherein, if a connection is established between the user equipment and the base station:
the configuration information is transmitted from the base station which is an access point of a radio access network where the survivor report is performed, to the user equipment, and
the measurement report is transmitted from the user equipment to the base station,
if the connection between the user equipment and the base station is released:
the configuration information is transmitted to the user equipment from an unmanned aerial vehicle (UAV) connected to a radio access network different from the radio access network or a satellite, and
the measurement report is transmitted from the user equipment to the UAV,
wherein different frequency bands are used if the connection between the user equipment and the base station is established and if the connection between the user equipment and the base station is released, respectively.

4. The method of claim 2, wherein the survivor report is transmitted to another user equipment requesting the server to transmit a survivor report of at least one user equipment comprising the user equipment.

5. The method of claim 4, wherein a message containing an estimation value of a location of each of the at least one user equipment estimated based on a user equipment location related parameter is transmitted from the base station to the other user equipment.

6. A method performed by a base station in a wireless communication system, comprising:
transmitting to a user equipment, configuration information related to survivor reporting in an emergency situation,
wherein the configuration information comprising at least one of location measurement method information of the user equipment or information of a survivor identification method used for survivor identification to determine that a user of the user equipment is in the emergency situation; and
receiving from the user equipment, a measurement report comprising the survivor report based on the survivor identification,
wherein the survivor report comprises at least one of the survivor identification method information used by the user equipment based on the survivor identification method information or location information of the user equipment measured based on a location measurement method determined based on location measurement method information of the user equipment.

7. The method of claim 6, wherein the configuration information further comprises at least one of address information of a server to which the survivor report is transmitted, reporting period information of the survivor report, or information of whether the survivor report contains measurement results of a neighbor base station of the user equipment, and
the survivor report further comprises at least one of the address information of the server, the reporting period information, remaining battery capacity information of the user equipment, or the measurement results for the neighbor base station.

8. The method of claim 6, wherein, if a connection between the user equipment and the base station is released:
the configuration information is transmitted to the user equipment from an unmanned aerial vehicle (UAV) connected to a radio access network different from the radio access network or a satellite, and
the measurement report is transmitted from the user equipment to the UAV,
wherein different frequency bands are used if the connection between the user equipment and the base station is established and if the connection between the user equipment and the base station is released, respectively.

9. The method of claim 6, further comprising:
if the connection between the user equipment and the base station is released before receiving the measurement report comprising the survivor report from the user equipment, after transmitting the configuration information related to the survivor report:
identifying reception unavailable of the measurement report comprising the survivor report from the user equipment; and
transmitting to a mobility management entity (MME), a message comprising an estimation value for the location of the user equipment estimated based on terminal location related parameters, based on the identification result.

10. The method of claim 9, further comprising:
receiving from a specific user equipment other than the user equipment, a message for requesting a survivor report of at least one user equipment comprising the user equipment;
transmitting a message requesting a survivor report of each of the at least one user equipment, to each of at least one neighbor base station associated with the at least one user equipment;
receiving a message comprising a survivor report of each of the at least one user equipment from each of the at least one neighbor base station; and
transmitting a response comprising the survivor report of the at least one user equipment to the specific user equipment,
wherein the survivor report of the at least one user equipment each comprises an estimation value for a location of each of the at least one user equipment based on a user equipment location related parameter.

11. The method of claim 10, wherein the user equipment location related parameter is a beamforming related parameter applied to signal transmission from the base station to the at least one user equipment, and
the beamforming related parameter comprises a beam offset and a beam index applied to the latest communication of the base station and the at least one user equipment.

12. A method performed by a server in a wireless communication system, comprising:
based on machine learning-based training, determining at least one of a reporting period of survivor reporting performed by at least one user equipment in an emergency situation or a survivor identification method to be used for survivor identification which determines that a user of the at least one user equipment is in the emergency situation;
transmitting to a mobility management entity (MME), a service registration message related to the survivor reporting of the at least one user equipment,
the service registration message comprises at least one of information of the reporting period, information of the survivor identification method, or location measurement method information of the at least one user equipment, determined based on the machine learning-based training; and
receiving from the MME, a service report message comprising a survivor report of each of the at least one user equipment based on the service registration message,
wherein the survivor report of each of the at least one equipment comprises at least one of the reporting period information, information of the survivor identification method used by each of the at least one user equipment determined based on the survivor identification method information, or location information of each of the at least one user equipment measured based on a location measurement method determined based on the location measurement method information.

13. The method of claim 12, wherein the service registration information further comprises at least one of address information of the server or information of whether the survivor report contains measurement results of a neighbor base station of each of the at least one user equipment, and
the survivor report further comprises at least one of the address information of the server, remaining battery capacity information of each of the at least one user equipment, or measurement results for the neighbor base station of each of the at least one user equipment.

14. The method of claim 12, further comprising:
receiving from the MME, a service report message comprising an estimation value of a the location of each of the at least one user equipment estimated based on a user equipment location-related parameter.

15. The method of claim 14, wherein the user equipment location related parameter comprises a beamforming related parameter applied to signal transmission from at least one base station related to the at least one user equipment to the at least one user equipment, and
the beamforming related parameter comprises a beam offset and a beam index applied to the latest communication of the at least one base station and the at least one user equipment.
